Europäisches Patentamt

European Patent Office

Office européen des brevets

(11) Numéro de publication: **0 409 816 A2**

# (12) DEMANDE DE BREVET EUROPEEN

(21) Numéro de dépôt: 90870115.4

(22) Date de dépôt: 20.07.90

(51) Int. Cl.5: **G02B 3/00, G02B 7/02,**
**G02B 23/14**

(30) Priorité: 20.07.89 BE 8900792

(43) Date de publication de la demande:
**23.01.91 Bulletin 91/04**

(84) Etats contractants désignés:
**CH DE FR GB IT LI**

(71) Demandeur: **ARSOC S.P.R.L.**
**Levée Gérard 17**
**B-4655 Chaineux(BE)**

(72) Inventeur: **Baikrich, Michel**
**Xhierfomont 42**
**B-4086 Stoumont(BE)**

(74) Mandataire: **Vanderperre, Robert et al**
**Bureau VANDER HAEGHEN 63 Avenue de la**
**Toison d'Or**
**B-1060 Bruxelles(BE)**

(54) Dispositif optique pour appareil de pointage à diode laser.

(57) Dispositif comprenant une lentille divergente (13) pour capter le faisceau lumineux à rayons pratiquement parallèles d'un appareil de pointage, ladite lentille divergente (13) étant percée en son centre d'un trou (14) de faible diamètre, destinée à être placée en regard de la fenêtre d'un appareil de pointage afin de capter le faisceau laser à rayons pratiquement parallèles (100) émis par l'appareil de pointage, la lentille (13) déviant les rayons laser qui l'atteignent autour du trou central (14) et produisant un faisceau divergent (110) tandis que les rayons qui atteignent ledit trou central (14) traversent celui-ci sans être déviés et forment un fin pinceau de lumière (120) de plus forte intensité, non dévié. La lentille divergente peut être montée dans un appareil de pointage de manière fixe ou être placée dans une fenêtre ménagée dans un corps (11) prévu pour coiffer un appareil de pointage. La lentille divergente peut de façon avantageuse être montée dans une tête (12) séparable du corps (11) coiffant l'appareil de pointage.

FIG. 1

## DISPOSITIF OPTIQUE POUR APPAREIL DE POINTAGE A DIODE LASER

La présente invention concerne un dispositif optique destiné à être combiné à un appareil de pointage à diode laser afin d'en améliorer la capacité de visée à l'intérieur d'un bâtiment obscur (clos ou de nuit). L'utilisateur étant muni de lunette-(s) à intensificateur de lumière (communément appelés night vision goggles ou goggles).

Un appareil de pointage (aussi appelé marqueur de cible) à diode laser comprend une diode laser émettant un faisceau de lumière, par exemple un faisceau de lumière invisible à l'oeil nu et un collimateur qui produit un faisceau très étroit avec une très faible divergence, qui donne par exemple un cercle lumineux de 35 mm à une distance de cent mètres. Un appareil de pointage de ce genre est certes efficace pour la visée nocturne, mais à l'intérieur d'un bâtiment très sombre, la puissance lumineuse du faisceau est tellement intense sur une petite surface qu'elle provoque un halo de lumière éblouissant autour du point lumineux qui donne à l'opérateur l'impression d'opérer dans le brouillard, le mettant dans l'impossibilité de discerner correctement la cible.

La présente invention pallie cet inconvénient grâce à un dispositif optique comprenant une lentille divergente percée en son centre d'un trou de faible diamètre, destinée à être placée en regard de la fenêtre d'un appareil de pointage afin de capter le faisceau laser à rayons pratiquement parallèles émis par l'appareil de pointage, la lentille déviant les rayons laser qui l'atteignent autour du trou central et produisant un faisceau divergent tandis que les rayons qui atteignent ledit trou central traversent celui-ci sans être déviés et forment un fin pinceau de lumière de plus forte intensité, non dévié.

La lentille divergente peut être montée dans un appareil de pointage de manière fixe ou être placée dans une fenêtre ménagée dans un corps prévu pour coiffer un appareil de pointage. La lentille divergente peut de façon avantageuse être montée dans une tête séparable du corps coiffant l'appareil de pointage. Le trou ménage dans la lentille divergente peut être recouvert par un disque en matière transparente afin de rendre l'ensemble étanche.

Un mode de réalisation exemplaire du dispositif selon l'invention est décrit dans ce qui suit à l'aide des figures jointes.

La figure 1 est une vue en perspective d'un dispositif exemplaire conforme à l'invention.

La figure 2 montre schématiquement en coupe un dispositif selon la figure 1 placé sur la tête d'un appareil de pointage à laser exemplaire.

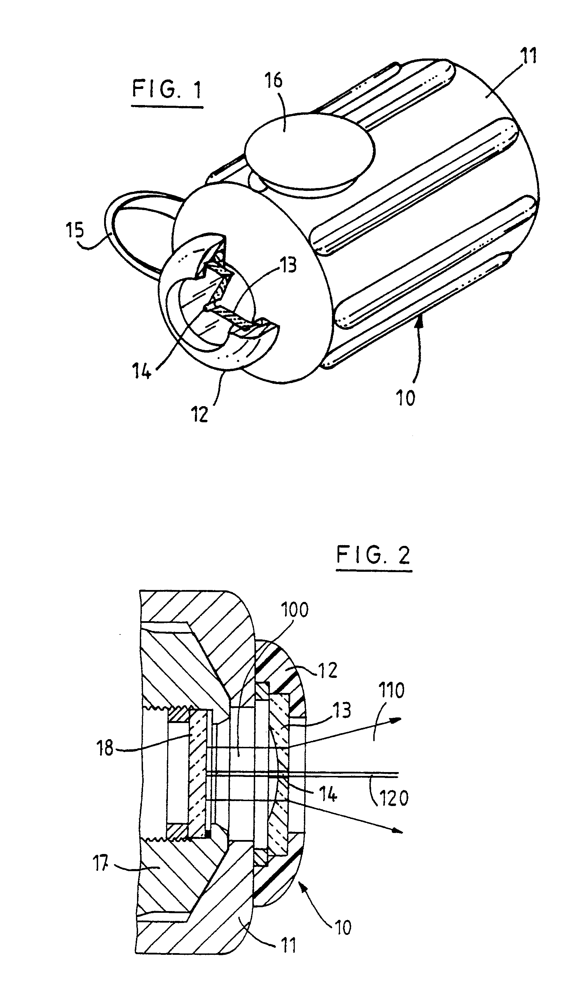

Se reportant à la figure 1, on voit représenté un mode de réalisation exemplaire du dispositif optique conforme à l'invention. Il s'agit d'un dispositif se présentant sous la forme d'un capuchon destiné à être adapté sur la tête d'un appareil de pointage à diode laser. Le dispositif optique selon l'invention, dési gné dans son ensemble par le signe de référence 10, comprend un corps creux 11 de forme générale cylindrique, ajusté pour être glissé sur la tête d'un appareil de pointage. Le corps 11 est ouvert à une extrémité et à son extrémité opposée, il est fermé par une fenêtre 12 munie d'une lentille divergente 13 percée en son centre d'un trou 14 de très faible diamètre, par exemple 0,5 millimètre.

Dans le mode de réalisation illustré à la figure 1, la fenêtre 12 est amovible; elle est attachée au corps 11 par un cordon souple 15 qui permet de ne pas la perdre lorsqu'elle est séparée du corps. Le téton 16 est prévu pour recevoir la fenêtre 12 lorsque la lentille divergente 13 n'est pas utilisée. Un autre mode d'exécution pourrait consister à prévoir une fenêtre 12 fixe, non séparable.

Un dispositif de divergence tel que représenté à la figure 1 est destiné à être glissé sur la tête d'un appareil de pointage à faisceau laser, qui est un appareil connu en soi. Il s'agit d'un appareil comprenant un générateur de laser, une source d'énergie électrique pour l'alimentation du générateur de laser et un dispositif pour ajuster la position axiale du générateur de laser afin que, lorsque l'appareil de pointage se trouve fixé sur une arme, l'axe du faisceau laser coïncide avec l'axe du canon de l'arme à une distance prédéterminée de celle-ci. La tête de l'appareil de pointage présente une fenêtre par laquelle sort le faisceau laser émis par le générateur de laser. La fenêtre est habituellement fermée par une simple plaque de verre.

La figure 2 montre le dispositif 10 tel que représenté à la figure 1 mis en place sur la tête 17 d'un appareil de pointage à faisceau laser exemplaire. Lorsque le corps 11 du dispositif 10 est ainsi adapté sur la tête de l'appareil de pointage, la lentille divergente 13 se trouve en face de la fenêtre 18 du pointeur et intercepte le faisceau laser 100 à rayons pratiquement parallèles sortant de la fenêtre du pointeur. Les rayons laser qui atteignent la partie de la lentille 13 autour du trou central 14 traversent la lentille en étant déviés et ils en sortent en formant un faisceau fortement divergent 110 tandis que les rayons laser centraux qui atteignent le trou central 14 traversent celui-ci sans déviation ni étalement. Après avoir traversé la lentille divergente 13, le faisceau laser comprend ainsi un faisceau fortement divergent 110 entourant un fin pinceau laser 120 concentré.

Le faisceau divergent 14 produit par exemple une tache lumineuse qui peut atteindre deux à trois mètres ou davantage à une distance de ving-cinq mètres environ. La divergence du faisceau 110 a pour effet d'en diminuer l'intensité lumineuse sur une cible et de permettre ainsi à l'opérateur de voir correctement la cible sans être ébloui. Le faisceau traversant la lentille est légèrement dévié mais de façon symétrique et le centre de la tache lumineuse ne coïncide plus avec le point d'impact du projectile sur la cible.

Par contre, le fin pinceau lumineux 120 qui traverse le trou central 14 atteint la cible avec une forte intensité et sans être dévié. Tandis que le faisceau divergent 110 illumine la cible et les environs sans occasionner d'éblouissement et permet une progression dans l'obscurité ainsi qu'une reconnaissance immédiate et sûre de la cible, le fin pinceau lumineux 120 permet un pointage précis et sûr, donnant la certitude de toucher la cible à l'endroit choisi.

Dans l'exemple représenté à la figure 1, la lentille divergente 13 est une lentille plano-concave. La lentille peut cependant être réalisée sous une forme différente, par exemple sous forme d'une lentille concave-concave. Le trou central 14 peut être obturé par un disque en matière transparente servant à rendre l'ensemble étanche.

Le mode de réalisation de l'invention décrit dans ce qui précède est un exemple donné à titre illustratif et l'invention n'est nullement limitée à cet exemple. Toute modification, toute variante et tout agencement équivalent doivent être considérés comme compris dans le cadre de l'invention.

Par exemple, la lentille divergente 13 selon l'invention peut être montée directement dans un appareil de pointage et y servir de fenêtre. Egalement, la lentille divergente pourrait être recouverte d'une lame en verre ou autre matière transparente ou translucide ayant pour effet de modifier l'état lumineux du faisceau, par exemple pour filtrer les rayons lumineux.

## Revendications

1. Dispositif optique pour un appareil de pointage à diode laser, caractérisé en ce qu'il comprend une lentille divergente (13) percée en son centre d'un trou (14) de faible diamètre, destinée à être placée en regard de la fenêtre d'un appareil de pointage afin de capter le faisceau laser à rayons pratiquement parallèles (100) émis par ledit appareil de pointage, la lentille (13) déviant les rayons laser qui l'atteignent autour du trou central (14) et produisant un faisceau divergent (110) tandis que les rayons qui atteignent ledit trou central (14) traversent celui-ci sans être déviés et forment un fin pinceau de lumière (120) de plus forte intensité, non dévié.

2. Dispositif selon la revendication 1, caractérisé en ce que la lentille divergente (13) est une lentille plano-concave.

3. Dispositif selon la revendication 1, caractérisé en ce que la lentille divergente (13) est une lentille concave-concave.

4. Dispositif selon l'une quelconque des revendications 1 à 3, dans lequel la lentille divergente (13) est montée dans un appareil de pointage soit de manière fixe, soit de manière amovible.

5. Dispositif selon l'une quelconque des revendications 1 à 4, dans lequel le trou (14) de la lentille divergente (13) est couvert par un disque en matière transparente ayant pour effet de rendre l'ensemble étanche.

6. Dispositif selon l'une quelconque des revendications précédentes, dans lequel la lentille divergente (13) est recouverte d'une lame de verre ou autre matière transparente ou translucide ayant pour effet de modifier l'effet lumineux du faisceau, par exemple pour le filtrage des rayons lumineux.

7. Dispositif selon l'une quelconque des revendications précédentes, dans lequel la lentille divergente (13) est montée dans un corps (11) prévu pour coiffer un appareil de pointage.

8. Dispositif selon la revendication 7, dans lequel la lentille divergente (13) est montée dans une tête (12) séparable du corps (11).

9. Dispositif selon la revendication 8, dans lequel la tête séparable (12) est reliée au corps (11) par un moyen d'attache (15).

FIG. 1

16

11

15

13

14

12

10

FIG. 2

100

12

110

13

18

14

120

17

10

11